**Europäisches Patentamt**

**European Patent Office**

**Office européen des brevets**

(19)

(11) Publication number:

**0 094 807**

**B1**

(12)

# EUROPEAN PATENT SPECIFICATION

(45) Date of publication of patent specification: **10.12.86**

(51) Int. Cl.⁴: **A 01 D 41/12**

(21) Application number: **83302722.0**

(22) Date of filing: **13.05.83**

(54) Interconnection between ducts.

(30) Priority: **14.05.82 AU 4006/82**

(43) Date of publication of application:
**23.11.83 Bulletin 83/47**

(45) Publication of the grant of the patent:
**10.12.86 Bulletin 86/50**

(84) Designated Contracting States:
**DE FR GB IT**

(56) References cited:
**EP-A-0 037 176**
**DD-A- 94 725**
**DE-A-2 302 499**
**DE-A-3 041 203**
**US-A-4 298 219**

(73) Proprietor: **CHAMBERLAIN JOHN DEERE PTY. LTD.**
**Welshpool Road**
**Welshpool Western Australia (AU)**

(72) Inventor: **Waghorn, Barry C.**
**15 Roebuck Drive**
**Manning Western Australia (AU)**

(74) Representative: **Matthews, Howard Nicholas et al**
**MATTHEWS HADDAN & CO Haddan House**
**33 Elmfield Road**
**Bromley Kent BR1 1SU (GB)**

Courier Press, Leamington Spa, England.

# Description

This invention relates to an interconnection between ducts defined by the feeder housing and an outlet of crop collecting platform of a harvester where it is necessary to provide for relative pivotal movement of one duct about the other.

The prior art to the above invention as exemplified by DE—A—2302499 (US—A—3731470) relates to harvesting combines where the cutter platform is capable of pivotal movement about an axis substantially parallel to the direction of travel of the combine. Such an arrangement permits the transverse angular orientation of the cutting platform to be varied in accordance with the profile of the ground being transversed by the harvester.

Another example of the prior art is disclosed in DE—A—3041203 (US—A—4253295) which describes: two frame members, one frame pivotally mounted to the feeder housing about an axis, another frame being able to rotate about an axis and mounted to the frame in order to support the platform for pivotal movement about the said axis perpendicular to the axis.

The present invention has as its object the provision of a mounting between the feeder housing and said platform which will allow pivotal movement therebetween about three perpendicular axes. A particular although non limiting application of the invention relates to use with a harvesting combine of the form disclosed in US—A—4359854 where the cutting platform is supported substantially independently of the combine. As a result of the pivotal arrangement of the invention full pivotal movement between said platform and combine about a substantially upright axis is accommodated. Furthermore the pivotal connection is facilitated by frame members being pivotally mounted on to the outlet of the platform and the inlet of the combine to provide two axes of pivotal movement and are interconnected to be slidable over each other to provide the third pivot axis.

According to the invention we provide an interconnection between the inlet of a feeder housing and the outlet of a crop collecting platform of a harvester said interconnection comprising means whereby the said platform is pivotally connected with said feeder housing by a first and second axis, said interconnection comprising two frame members, one being mounted to said platform to surround said outlet thereof and being pivotally mounted to said platform for pivotal movement about the first axis, the other frame being pivotally mounted to the said feeder housing to surround the said inlet for pivotal movement about the second and approximately horizontal axis which is perpendicular to the general central longitudinal axis of the said housing and platform, the first and second axes being perpendicular to each other, characterised in that the said first axis is upwardly directed and perpendicular to the said general central longitudinal axis of the housing and platform, the frames being further pivotally interconnected to be slidable over each other about the third axis which is substantially parallel with said general central longitudinal axis, said second and third axes being perpendicular to each other and extending in a plane normal to the first axis.

The invention will be more fully understood in the light of the following description of one specific embodiment.

The description is made with reference to the accompanying drawings of which;

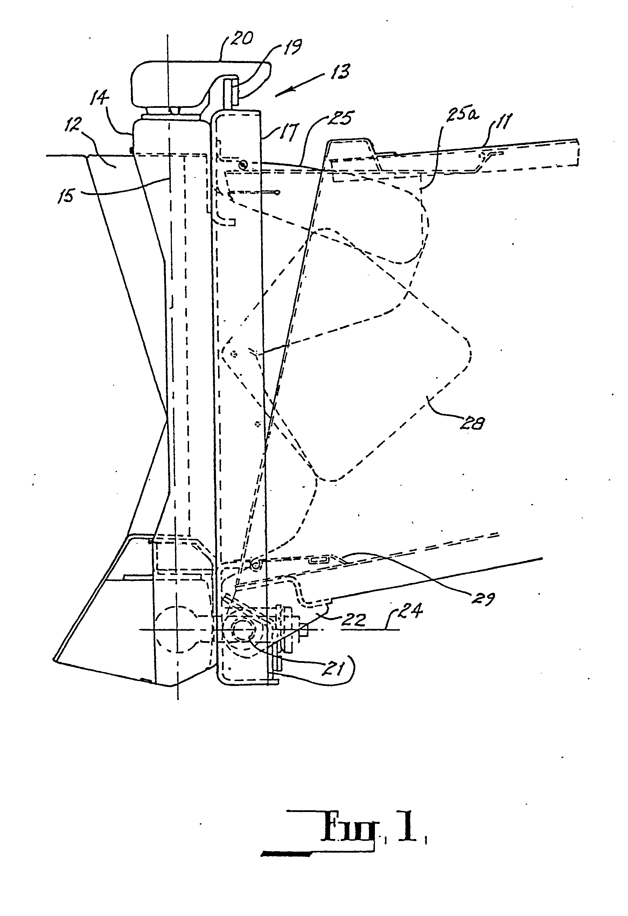

Figure 1 is a side elevation of the interconnection between the feeder housing and the crop collecting platform of a harvester; and

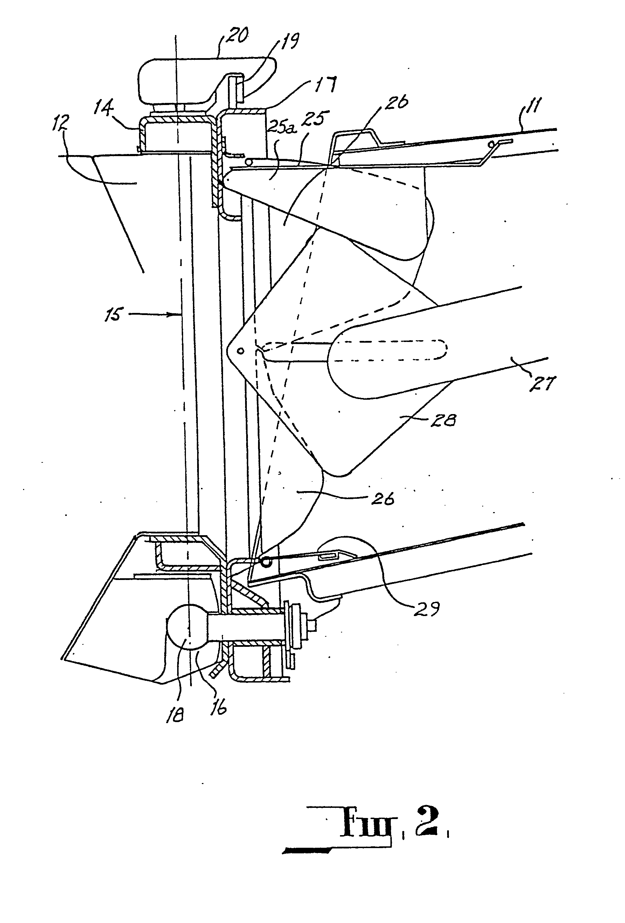

Figure 2 is a sectional elevation of the interconnection of Figure 1.

The embodiment is directed towards an interconnection between the inlet of the feeder housing 11 of a combine harvester and the outlet 12 of the auger of the crop collecting platform of the combine harvester which is characterised in that the crop collecting platform is supported at least partially independently on the main body of the harvester. As a result of such support, the crop collecting platform must be capable of articulation in relation to the main body of the harvester about three axis perpendicular to each other and must also facilitate the continuity of flow from the platform to the feeder housing despite such articulation. The interconnection between the feeder housing 11 and the outlet 12 is effected by an interconnecting member 13 formed by a first frame 14 mounted to the outlet 12 to define the periphery thereof. The first frame 14 is pivotally mounted to the outlet 12 to be capable of limited relative side by side pivotal movement thereon about an axis 15 perpendicular to the central longitudinal axis of the duct and perpendicular to the transverse lateral axis of the duct. The pivotal mounting of the frame 14 to the outlet 12 is effected by a pair of pins (not shown) extending from the frame into the upper and lower walls of the outlet 12. The periphery of the first frame is formed with a skirt surrounding the walls of the outlet. The skirt serves the purpose of closing any spaces formed between the frame 14 and the outlet as a result of said limited pivotal movement therebetween. The lower end of the outlet 12 adjacent the first frame 14 is formed with a ball shaped socket 16 associated with a latch (not shown) in the lower portion thereof.

The interconnecting member 13 further comprises a second frame 17 supporting a longitudinally extending ball 18 at a mid-point along its lower edge which is to be accommodated in the socket 16 of the outlet 12 and retained therein by the latch mechanism associated with the socket. On release of the latch mechanism, the ball is capable of downward movement out of engagement with the socket 16. The upper edge of the frame 17 supports a stop 19 which is engaged by a spring loaded latch 20 mounted to the first frame member 14 when the ball 18 is received and supported in the socket 16 and the first and second frames 14 and 17 are in face to face abutting relationship, the stop 19 is engaged with the latch member 20. Frames 14 and 17 are slidable over each other by virtue of relative pivotal movements therebetween about the ball 18.

The second frame member 17 is mounted to the lower edge of the feeder housing 11 by means of a pair of transversly extending pins 21 engaging lugs 22 located each side of the feeder housing 11 and of the second frame 17 respectively.

When the first and second frames 14 and 17 are in face to face abutting engagement with each other, both frames are together capable of pivotal movement about said first axis 15 about which the first frame 14 is pivotally mounted to the outlet 12. In addition, both frames 14 and 17 are capable of pivotal movement about transverse second axis defined by the central axis of the pivot pins 21 by which the second frame 17 is pivotally mounted to the lower edge of the feeder housing 11. Furthermore, by virtue of the engagement of the ball 18 of the second frame 17 in the socket 16 of the outlet 12, the frames are capable of limited relative pivotal movement about a third axis 24 defined by the central longitudinal axis of the ball member 18 whereby as a result of such pivotal movement, the frames slidably move over each other. The abutting faces of the frames 14 and 17 are formed with abutting flanges whereby on said limited relative slidable movement between the frames 14 and 17, the space defined thereby does not become exposed.

To accommodate for the variation in spacing between the second frame 17 and the mouth of the feeder housing 11, the frame 17 supports extension members which extend from the sides of the frame 17 into the mouth of the feeder housing 11, to close the space therebetween. The extension comprises an upper plate 25 which extends from the upper edge of the first frame 17 into the feeder housing 11 to close off the space between the upper wall of the feeder housing 11 and the upper edge of the frame 17. The upper plate 25 is co-joined with a skirt 25a at each side of the upper plate which extend partially down each side of the feeder housing. The space formed between the frame and the sides of the feeder housing are closed by check plates 26 of the frame 17 which extends from the sides of the frame 17 into the feeder housing 11 adjacent the sides thereof. The check plates 26 are rebated at an intermediate point in order that they do not interfere with the conveyor 27 in the feeder housing when the second frame 17 is in close abutting relationship with the mouth of the feeder housing 11. To close off the space defined by the rebate, a floating plate member 28 is pivotally mounted to the sides of the frame 17 and is formed with a slot which engages over the shaft of the end most roller of the conveyor 27 to be slidable thereover as the second frame 17 moves between two end positions on the mouth of the feeder housing 11. The lower edge of the frame 17 supports a hinged plate 29 which extends the full width of the mouth of the feeder housing and is hingedly mounted to the lower edge of the second frame 17 to accommodate variations in attitude between the second frame 17 and the feeder housing 11 with pivotal movement of the second frame 17 relative to the feeder housing 11.

In order to disconnect the feeder housing 11 from the outlet duct 12 of the crop collection platform, the latch (not shown) on the socket 16 at the lower edge of the outlet 12 is disengaged which permits a downward relative movement of the second frame 17 from the first frame 14 to cause the stop 19 on the edge of the second frame 17 to become disengaged from the latching member 20. Biassing means is provided between the second frame 17 and the feeder housing 11 such that when unconstrained, the second frame 17 will move into close abutting relationship with the mouth of the feeder housing 11. To re-engage the outlet 12 of the crop collection platform with the feeder housing 11, the feeder housing 11 is raised to its substantially uppermost position at which position the second frame 17 becomes inclined rearwardly away from the outlet 12 and the outlet 12 with the first frame 14 is moved such that the ball 18 on the second frame becomes engaged and latched in the socket 16 of the first frame. With downward pressure being applied to the ball member 18 by virtue of the weight of the crop collection platform associated with the outlet 12, the second frame 17 is caused to pivot about the second axis defined by the central axis of pin 21 such that the stop 19 moves into engagement with the spring loaded latch 20 whereby the two frames 14 and 17 come into abutting face to face relationship.

As a result of the embodiment, an interconnection is provided between the feeder housing of a combine and the outlet of the crop collection platform which permits relative pivotal movement between the two items about three perpendicular axes and which is capable of being readily engaged and disengaged.

**Claims**

1. An interconnection (13) between the inlet of a feeder housing (11) and the outlet (12) of a crop collecting platform of a harvester said interconnection (13) comprising means whereby the said platform is pivotably connected with said feeder housing (11) by a first and second axis (15), (21) said interconnection (13) comprising two frame members (14, 17), one (14) being mounted to said platform to surround said outlet (12) thereof and being pivotally mounted to said platform for pivotal movement about the first axis (15), the other frame member (17) being pivotally mounted to the said feeder housing (11) to surround the said inlet for pivotal movement about the second and approximately horizontal axis (21) which is perpendicular to the general central longitudinal axis of the said housing (11) and platform, the first (15) and second (21) axes being perpendicular to each other, characterised in that said first axis (15) is upwardly directed and perpendicular to the said general longitudinal axis of the housing and platform, the frames (14, 17) being further pivotally interconnected to be slidable over each other about a third axis (24) which is substantially parallel with the said general central longitudinal axis, said second (21) and third (24) axes being perpendicular to each other and extending in a plane normal to the first axis (15).

2. An interconnection as claimed in claim 1 wherein said other frame (17) is mounted by its lower edge to the lower edge of the feeder housing (11) for pivotal movement about said second axis (21), and said frame members (14, 17) are also interconnected at their lower edge for pivotal movement about said third axis (24).

3. An interconnection as claimed at claim 2, wherein said other frame member (17) is formed along its remaining edge with extension panels (25, 25a) which extend between said other frame member and the feeder housing.

4. An interconnection as claimed at claim 3 wherein the upper edges of the first and second frame members (14, 17) are clampingly held together by releasable latching means (20) which permit movement between said frame members about said third axis (24) and relative movement between said frame members parallel to said first axis (15) wherein the pivotal interconnection between said first and second frame members are capable of disengagement on release of said latching means (20) to allow movement between said frame members parallel to said first axis (15).

## Patentansprüche

1. Verbindungseinrichtung (13) zwischen der Einlaßöffnung eines Fördergehäuses (11) und der Auslaßöffnung (12) einer Erntegutsammelplattform einer Mähmaschine, wobei diese Verbindungseinrichtung (13) Mittel umfaßt, durch welche diese Plattform über eine erste Achse (15) und zweite Achse (21) mit dem Fördergehäuse (11) verbunden ist, wobei diese Verbindungseinrichtung (13) zwei Rahmen (14, 17) umfaßt, von denen einer (14) so an der Plattform angebaut ist, daß er deren Auslaßöffnung (12) umgibt und mit dieser Plattform um die erste Achse (15) schwenkbar befestigt ist, und der zweite Rahmen (17) schwenkbar am Fördergehäuse (11) angebaut ist, so daß er die Einlaßöffnung umgibt und um die zweite und annähernd horizontale Achse (21) schwenkbar ist, die senkrecht zur zentralen Hauptlängsachse des Gehäuses sowie der Plattform steht, wobei die erste Achse (15) und die zweite Achse (21) senkrecht zueinander stehen, dadurch gekennzeichnet, daß die erste Achse (15) nach oben gerichtet ist und senkrecht zur zentralen Hauptlängsachse des Gehäuses und der Plattform steht, daß die Rahmen (14, 17) ferner schwenkbar so miteinander verbunden sind, daß sie um eine dritte Achse (24) schwenkbar gegeneinander verschiebbar sind, welche im wesentlichen zur zentralen Hauptlängsachse parallel angeordnet ist, und daß die zweite Achse (21) und dritte Achse (24) senkrecht zueinander stehen und in einer zur ersten Achse (15) senkrecht stehenden Ebene liegen.

2. Verbindungseinrichtung nach Anspruch 1, dadurch gekennzeichnet, daß der zweite Rahmen (17) über seine untere Kante mit der unteren Kante des Fördergehäuses (11) um die zweite Achse (21) schwenkbar verbunden ist, und daß die Rahmen (14, 17) außerdem jeweils über ihre unteren Kanten miteinander um die dritte Achse (24) schwenkbar verbunden sind.

3. Verbindungseinrichtung nach Anspruch 2, dadurch gekennzeichnet, daß der zweite Rahmen (17) an seiner verbleibenden Kante Verlängerungsplatten (25, 25a) aufweist, welche zwischen den zweiten Rahmen und das Fördergehäuse hineinragen.

4. Verbindungseinrichtung nach Anspruch 3, dadurch gekennzeichnet, daß die oberen Kanten des ersten Rahmens (14) und zweiten Rahmens (17) hakenartig durch lösbare Verriegelungsmittel (20) zusannengehalten werden, welche eine Bewegung der Rahmen gegeneinander um die dritte Achse (24) sowie eine gegenseitige Relativbewegung der beiden Rahmen parallel zur ersten Achse (15) zulassen, wobei die Schwenkverbindung zwischen dem ersten und zweiten Rahmen nach Lösen der Verriegelungsmittel (20) entkuppelbar sind, um eine Bewegung der Rahmen gegeneinander parallel zur ersten Achse zu ermöglichen.

## Revendications

1. Une interconnexion (13) entre l'entrée d'une enveloppe (11) du dispositif d'alimentation et la sortie (12) d'une plate-forme de réception de la récolte d'une moissonneuse, ladite interconnexion (13) comportant des moyens tels que ladite plate-forme soit reliée de manière pivotante à ladite enveloppe (11) du dispositif d'alimentation par un premier et un second axes (15, 21), ladite interconnexion (13) comportant deux éléments de cadre (14, 17), dont l'un (14) est monté sur ladite plate-forme pour entourer ladite sortie (12) de celle-ci et est monté de manière pivotante sur ladite plate-forme pour pouvoir pivoter autour du premier axe (15), l'autre élément de cadre (17) étant monté de manière pivotante sur ladite enveloppe (11) du dispositif d'alimentation pour entourer ladite entrée de manière à pouvoir pivoter autour du second axe sensiblement horizontal qui est perpendiculaire à l'axe longitudinal central général de ladite enveloppe (11) et de la plateforme, le premier (15) et le second (21) axes étant perpendiculaires l'un à l'autre, caractérisée en ce que ledit premier axe (15) est dirigé vers le haut et perpendiculaire audit axe longitudinal central général de l'enveloppe et de la plate-forme, les cadres (14, 17) étant de plus reliés de manière pivotante pour pouvoir glisser l'un sur l'autre autour d'un troisième axe (24) qui est sensiblement parallèle audit axe longitudinal central général, lesdits second (21) et troisième (24) axes étant perpendiculaires l'un à l'autre et s'étendant dans un plan normal au premier axe (15).

2. Une interconnexion selon la revendication 1, dans laquelle ledit autre cadre (17) est montépar son bord inférieur sur le bord inférieur de l'enveloppe (11) du dispositif d'alimentation pour pouvoir pivoter autour dudit second axe (21), et lesdits éléments de cadre (14, 17) sont également interconnectés à leur bord inférieur pour pouvoir pivoter autour dudit troisième axe (24).

3. Une interconnexion selon la revendication 2, dans laquelle ledit autre élément de cadre (17) comporte, sur le reste de son bord, des panneaux de prolongement (25, 25a) qui s'étendent entre ledit autre élément de cadre et l'enveloppe du dispositif d'alimentation.

4. Une interconnexion selon la revendication 3, dans laquelle les bords supérieurs du premier et du second éléments de cadre (14, 17) sont maintenus ensemble par serrage par l'intermédiaire de moyens (20) de verrouillage libérable qui permettent un mouvement entre lesdits éléments de cadre autour du troisième axe (24) et un mouvement relatif entre lesdits éléments de cadre parallèlement audit premier axe (15), l'interconnexion pivotante entre lesdits premier et second éléments de cadre pouvant se séparer à la libération desdits moyens de verrouillage (20) pour permettre un mouvement entre lesdits éléments de cadre parallèlement audit premier axe (15).

Fig. 1

$$\underline{\text{Fig. 2}}$$